# EUROPÄISCHE PATENTSCHRIFT

(11) **EP 4 249 348 B1**
(45) Veröffentlichungstag und Bekanntmachung des Hinweises auf die Patenterteilung: **06.08.2025**
(21) Anmeldenummer: 23163328.0
(22) Anmeldetag: 22.03.2023
(51) Int. Cl.: B62B 3/00, B62B 5/00

(54) **ZUSTELLWAGEN**
DELIVERY CARRIAGE
CHARIOT DE LIVRAISON

(30) Priorität: 22.03.2022 AT 501832022
(43) Veröffentlichungstag der Anmeldung: 27.09.2023
(73) Patentinhaber: Österreichische Post AG, 1030 Wien (AT)
(72) Erfinder: PERNER, Wolfgang E., 4810 Gmunden (AT)
(74) Vertreter: SONN Patentanwälte GmbH & Co KG

(56) Entgegenhaltungen:
- EP-A2- 1 967 437
- EP-A2- 2 712 786
- CH-A- 419 966
- DE-U- 7 529 183

## Beschreibung

Die Erfindung betrifft einen Zustellwagen, insbesondere Post-Zustellwagen gemäß dem Oberbegriff von Anspruch 1.

Ein Zustellwagen ist beispielsweise aus der EP 0 711 698 A2 bekannt. Der Zustellwagen hat einen kastenartigen Aufbau zur Aufnahme des zu transportierenden Zusteller- bzw. Verteilergutes.

Die CH 419966 A, DE 9404450 U1 und US 9457828 B1 zeigen andersartige Transportvorrichtungen mit kipp- bzw. schwenkbaren Seitenwänden.

Die EP 2 712 786 A2 zeigt einen Rollenbehälter, welcher für die Zustellung verwendet werden kann. Dabei weist dieser einen verschiebbaren Seitenwandteil auf.

Die EP 1 967 437 A2 offenbart einen Zimmermädchenwagen mit einem kastenförmigen Aufbau und einer Schiebetüre, welche mit einer Haube fest verbunden ist.

Die DE 75 29 183 U zeigt einen Transportbehälter für Motorräder, welcher klappbare Seitenwände, sowie einen klappbaren Deckel, aufweist.

Aus der CH419966A ist ein Transportbehälter mit einem zweiteiligen Deckel mit einem Vorderteil und einem Hinterteil bekannt. Das Vorderteil ist mittels eines Scharniers mit dem Hinterteil des Deckels verbunden. Am Vorderteil des Deckels ist eine Lasche angeordnet, welche mit einem Kniehebelverschluss verbunden werden kann. Der Transportbehälter weist eine Vorderwand auf, welche nach vorne aufgeklappt werden kann. In geschlossener Stellung überlappt eine Vorderkante des Vorderteils des Deckels die Oberkante der Vorderwand. Um diesen Transportbehälter beladen zu können, muss zunächst der Kniehebelverschluss geöffnet werden. Dann kann das Vorderteil des Deckels etwas angehoben werden, um die Vorderwand freizugeben, welche schließlich nach vorne gekippt werden kann. Sowohl über den Deckel als auch über die Seitenwand können Gegenstände in dem Transportbehälter aufgenommen oder aus dem Transportbehälter entnommen werden. Die Vorderwand dieses Transportbehälters wird daher nach vorne geklappt. Dieser Transportbehälter weist gegenüber der weiter unten geschilderten Erfindung einige signifikante Nachteile auf. Das schwenkbare Vorderteil ermöglicht nur eine Entnahme von Objekten von oben bzw. schräg aus dem Transportbehälter. Weiters können wegen des im Verhältnis zur gesamten Seitenwand kleinen Vorderteils nur kleinvolumige Transportgüter entnommen werden. Eine nach außen schwenkbare Klappe bringt weitere Nachteile mit sich. Zustellwagen werden oft bei beengten Platzverhältnissen eingesetzt, z.B**.** auf Gehsteigen oder in Gebäudekomplexen. Hierbei kann eine nach außen schwenkende Klappe störend sein. Ausgehend von diesem Stand der Technik wäre es auch nicht naheliegend, die Kipptür durch eine Schiebetür zu ersetzen. Bei der CH419966A wird die Seitenwand dadurch in der Schließstellung blockiert, dass der Deckel oberseitig die aufklappbare Seitenwand umgreift. Bei einer Schiebetüre würde der in CH419966A beschriebene Blockiermechanismus jedoch nicht funktionieren, da die Seitenwand immer noch seitlich verschiebbar wäre.

Die DE9404450U1 zeigt einen Zustellerwagen, der in der Ausführungsform der Fig. 3 drei Kästen aufweist. Die beiden Kästen sind an ihren Längswänden jeweils mit einer Zugangstür ausgestattet. Darüber hinaus weisen die beiden Kästen jeweils eine die Dachfläche bildende Klappe auf. Die Zugangstür wird an der Seite in der Schließstellung durch ein Übergreifen der Klappe blockiert. Auch die DE9404450U1 bringt die oben in Verbindung mit CH419966A geschilderten Nachteile mit sich. Es wäre auch bei diesem Stand der Technik nicht naheliegend, eine Schiebetür einzusetzen, da die in DE9404450U1 beschriebene Blockade der Schwenktür durch oberseitiges Umgreifen mit dem Deckel bei einer Schiebetür nicht funktionieren würde - die Schiebetür wäre immer noch seitlich verschieblich.

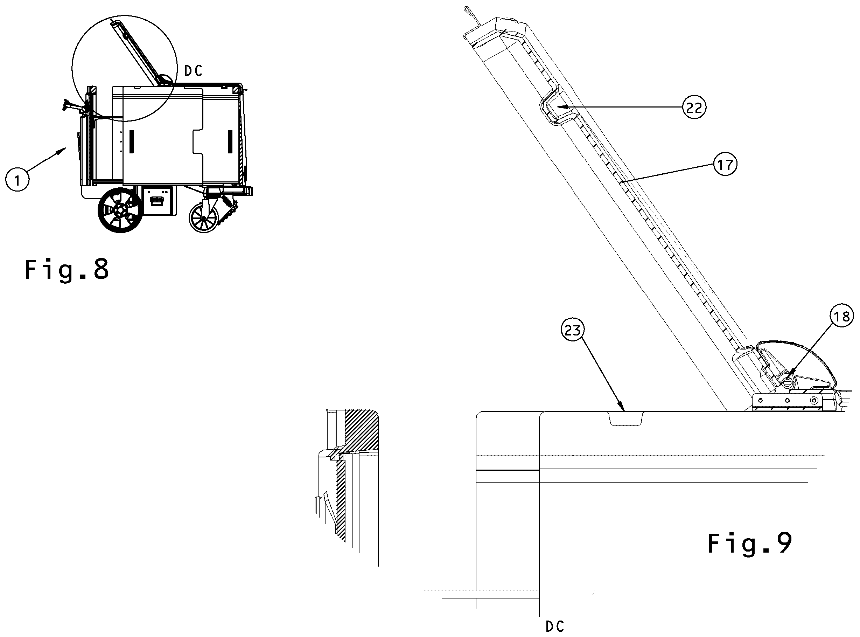

US9457828B1 offenbart einen Wagen zum Sammeln und Aufbewahren von Gegenständen. Der Wagen weist verschiedene Möglichkeiten zur Lagerung von Gegenständen auf. In der Ausführungsform der Fig. 8 und Fig. 9 weist der Wagen eine vordere Tür auf, an welcher ein Deckel gelenkig angebracht ist. Mit dem Deckel wird eine oberseitige Zugangsöffnung verschlossen. Im geschlossenen Zustand umgreift der Deckel ein Seitenpaneel des Wagens, wodurch die Tür gegen ein Überführen in die Offenstellung blockiert ist. Um die Türe zu öffnen, muss einerseits ein Verschluss geöffnet werden und andererseits auch der Deckel teilweise geöffnet werden. Die Tür ist als Schwenktür ausgeführt. Die Seitenwand weist zwei Blockiereinrichtungen auf. Einerseits muss der Deckel teilweise geöffnet werden, um die Überlappung freizugeben und andererseits muss der Verschluss gelöst werden. Auch die US9457828B1 lehrt somit lediglich einen Blockiermechanismus für Schwenktüren, welcher nicht auf den erfindungsgemäßen Zustellerwagen mit Schiebetür übertragbar wäre.

Die Aufgabe der vorliegenden Erfindung liegt darin, einen Zustellwagen zu schaffen, welcher einen einfachen, intuitiven und variablen Zugriff auf das Transportgut im Inneren von verschiedenen Richtungen aus ermöglicht, ohne das Transportgut beim Transport verlieren zu können.

Diese Aufgabe wird durch einen Zustellwagen nach Anspruch 1 gelöst. Bevorzugte Ausführungsformen sind in den abhängigen Ansprüchen angegeben.

Der erfindungsgemäße Zustellwagen weist daher auf:
ein Fahrgestell mit Rädern,
einen vom Fahrgestell getragenen Aufbau mit einem Aufnahmeraum zur Aufnahme von Transportgut, insbesondere von Poststücken,
wobei der Aufbau zumindest eine Seitenwand aufweist, welche als Schiebetür ausgeführt ist und zwischen einer eine seitliche Zugangsöffnung verschließenden Schließstellung und einer die seitliche Zugangsöffnung freigebenden Offenstellung beweglich ist,
wobei der Aufbau weiters zumindest einen Deckel aufweist, welcher zwischen einem eine oberseitige Beladeöffnung verschließenden geschlossenen Zustand und einem die oberseitige Beladeöffnung freigebenden geöffneten Zustand beweglich ist,
wobei eine Scharniereinrichtung vorgesehen ist, mit welcher der Deckel zwischen dem geschlossenen Zustand über einen teilweise geöffneten Zustand in den geöffneten Zustand verschwenkbar ist.

Erfindungsgemäß ist weiters eine Blockiereinrichtung vorgesehen, welche dazu ausgebildet ist, im geschlossenen Zustand des Deckels die Seitenwand in der Schließstellung zu blockieren und in einem zumindest teilweise geöffneten Zustand des Deckels die Bewegung der Seitenwand von der Schließ- in die Offenstellung freizugeben, wobei durch die Bewegung des Deckels vom geschlossenen Zustand in den zumindest teilweise geöffneten Zustand die Blockiereinrichtung in einer Freigabestellung angeordnet wird, in welcher die Bewegung der Seitenwand von der Schließ- in Richtung der Offenstellung freigegeben wird.

Der Aufnahmeraum im Inneren des Aufbaus kann einerseits über die oberseitige Beladeöffnung und andererseits über die seitliche Zugangsöffnung mit Transportgut beladen und entladen werden. Um einen Verlust von Transportstücken beim Transport zuverlässig zu verhindern, ist die Blockiereinrichtung im geschlossenen Zustand des Deckels in einer Blockierstellung angeordnet, in welcher die Seitenwand gegen eine Bewegung von der Schließ- in Richtung der Offenstellung gesichert ist. Im geschlossenen Zustand des Deckels kann so eine versehentliche Freigabe der seitlichen Zugangsöffnung vermieden werden. Zum Be- und Entladen des Aufnahmeraums ist es erforderlich, den Deckel vom geschlossenen Zustand in den zumindest teilweise, d.h. je nach Ausführung teilweise oder vollständig geöffneten, Zustand zu bewegen. Dadurch wird die Blockiereinrichtung in einer Freigabestellung angeordnet, in welcher die Bewegung der Seitenwand von der Schließ- in Richtung der Offenstellung freigegeben wird. Diese Ausführung ermöglicht eine besonders einfache, intuitive und sichere Bedienung, da das (teilweise) Öffnen des Deckels mit der Freigabe der seitlichen Zugangsöffnung einhergeht.

Für die Zwecke dieser Offenbarung beziehen sich die Orts- und Richtungsangaben, wie "oben", "unten", "horizontal", "vertikal", "seitlich" etc., auf den bestimmungsgemäßen Gebrauch des Zustellwagens auf einem horizontalen Untergrund bei Geradeaus-Vorwärtsfahrt.

Bei einer bevorzugten Ausführungsform weist die Blockiereinrichtung einen Vorsprung an einem von Seitenwand und Deckel und eine Ausnehmung am anderen von Seitenwand und Deckel auf, wobei der Vorsprung zum Blockieren der Bewegung der Seitenwand von der Schließ- in die Offenstellung im geschlossenen Zustand des Deckels in die Ausnehmung eingreift und im (teilweise) geöffneten Zustand des Deckels aus der Ausnehmung herausgeführt ist. Bevorzugt ist der Vorsprung am Deckel und die Ausnehmung an der Seitenwand vorgesehen. Es kann aber auch der Vorsprung an der Seitenwand und die Ausnehmung am Deckel vorgesehen sein. Im geschlossenen Zustand des Deckels ist der Vorsprung so in der Ausnehmung angeordnet, dass die Seitenwand nicht von der Schließ- in Richtung der Offenstellung überführt werden kann. Vorteilhafterweise ist es so nicht möglich, dass die seitliche Zugangsöffnung versehentlich geöffnet wird. Dadurch kann einem Verlust von Transportstücken, etwa beim Transport zum Zielort, vorgebeugt werden. Soll der Aufnahmeraum über die seitliche Zugangsöffnung beladen oder entladen werden, wird der Deckel im (zumindest teilweise) geöffneten Zustand angeordnet, wodurch der Vorsprung und die Ausnehmung der Blockiereinrichtung außer Eingriff kommen, so dass die Seitenwand von der Schließ- in die Offenstellung bewegt und so die seitliche Zugangsöffnung freigegeben wird.

Um einen reversibel lösbaren Eingriff zwischen der Ausnehmung und dem Vorsprung zu ermöglichen, ist die Ausnehmung bei einer bevorzugten Ausführungsform an einem oberen Randbereich der Seitenwand und der Vorsprung an einem seitlichen Randbereich des Deckels vorgesehen. Bei dieser Ausführungsform kann die Ausnehmung als Vertiefung der Oberkante der Seitenwand ausgebildet sein, in welche der entsprechend ausgebildete Vorsprung des Deckels eingreifen kann. Je nach Ausführung kann der Vorsprung vom seitlichen Randbereich des Deckels beispielsweise nach innen, in Richtung des Aufnahmeraums abstehen.

Bei einer bevorzugten Ausführungsform ist eine Verriegelungseinrichtung vorgesehen, welche in einem verriegelten Zustand den Deckel in dem geschlossenen Zustand verriegelt und in einem entriegelten Zustand die Bewegung des Deckels vom geschlossenen Zustand in Richtung des geöffneten Zustands freigibt. Im verriegelten Zustand ist einerseits der Deckel gegen eine Bewegung in Richtung des geöffneten Zustands gesichert und andererseits die Seitenwand, über die Blockiereinrichtung, gegen eine Bewegung von der Schließ- in Richtung der Offenstellung blockiert.

Besonders bevorzugt ist eine Ausführungsform, bei welcher die Verriegelungseinrichtung ein erstes Verriegelungselement, insbesondere einen ersten Verriegelungshebel, aufweist, wobei der Deckel in einem entriegelten Zustand des ersten Verriegelungselements in dem teilweise geöffneten Zustand anordenbar ist, in welchem der Deckel gegen eine Bewegung vom teilweise geöffneten Zustand in Richtung des geöffneten Zustands gesichert ist. Um das Be- und Entladen des Aufnahmeraums über die seitliche Zugangsöffnung freizugeben, ist es somit lediglich erforderlich, das erste Verriegelungselement zu entriegeln, wodurch der Deckel in dem teilweise geöffneten Zustand angeordnet werden kann, welcher zwischen dem geschlossenen Zustand und dem geöffneten Zustand liegt. In diesem teilweise geöffneten Zustand ist die Blockiereinrichtung der Seitenwand in der Freigabestellung angeordnet, d.h. deaktiviert. Vorteilhafterweise ist es somit nicht erforderlich, den Deckel vollständig zu öffnen, bevor die seitliche Zugangsöffnung freigegeben werden kann. Es genügt eine vergleichsweise kurze Bewegung des Deckels von dem geschlossenen in den teilweise geöffneten Zustand, um die Blockiereinrichtung von der Blockier- in die Freigabestellung zu überführen, so dass die Bewegung der Seitenwand von der Schließ- in die Offenstellung freigegeben wird.

Der teilweise geöffnete Zustand ist bevorzugt näher, insbesondere um ein Mehrfaches näher, am geschlossenen Zustand als am geöffneten Zustand. Vorteilhafterweise kann so die Hubbewegung des Deckels zur Freigabe der Seitenwand reduziert werden. Dadurch wird der Öffnungsmechanismus des Deckels geschont. Als geöffneter Zustand wird der vollständig geöffnete Zustand bezeichnet, aus dem der Deckel nicht mehr weiter in Öffnungsrichtung bewegt werden kann, sondern nur noch in Gegenrichtung in Richtung des geschlossenen Zustands.

Wenn das Be- und Entladen über die seitliche Zugangsöffnung geschehen soll, genügt es, den Deckel in den teilweise geöffneten Zustand für die Freigabe der Blockiereinrichtung, aber nicht bis in den geöffneten Zustand zu bewegen. Zur Freigabe der oberseitigen Beladeöffnung ist es günstig, wenn die Verriegelungseinrichtung ein zweites Verriegelungselement, insbesondere einen zweiten Verriegelungshebel, aufweist, wobei der Deckel in einem entriegelten Zustand des zweiten Verriegelungselements vom teilweise geöffneten Zustand bis in den geöffneten Zustand beweglich ist. Durch Entriegeln des zweiten Verriegelungselements wird die Bewegung des Deckels vom teilweise geöffneten Zustand in den geöffneten Zustand freigegeben.

Bei einer bevorzugten Ausführungsform ist das erste und/oder das zweite Verriegelungselement am Aufbau, insbesondere verschwenkbar, gelagert. Bevorzugt ist das erste und/oder das zweite Verriegelungselement jeweils gegen die Federkraft eines Federelements vom verriegelten in den entriegelten Zustand beweglich, insbesondere verschwenkbar.

Weiters kann der Deckel, insbesondere an der Innenseite, ein Rastelement aufweisen, welches im geschlossenen Zustand des Deckels mit dem ersten Verriegelungselement verriegelt ist und/oder im teilweise geöffneten Zustand des Deckels mit dem zweiten Verriegelungselement verriegelt ist.

Zur Vorbereitung des Transports nach dem Be- oder Entladen des Aufnahmeraums ist es günstig, wenn das erste Verriegelungselement und/oder das zweite Verriegelungselement eine Auflaufschräge zur Auslenkung des ersten bzw. zweiten Verriegelungselements beim Bewegen des Deckels vom geöffneten in den geschlossenen Zustand aufweist. Beim Schließen des Deckels trifft das Rastelement auf die Auflaufschräge des zweiten bzw. ersten Verriegelungselements, wodurch das Rastelement das erste bzw. das zweite Verriegelungselement (temporär) auslenkt und so passieren kann.

Bei einer bevorzugten Ausführungsform ist eine Bedieneinrichtung zur Überführung der Verriegelungseinrichtung vom verriegelten Zustand in den entriegelten Zustand vorgesehen. Bevorzugt ist die Bedieneinrichtung zur Überführung des ersten und des zweiten Verriegelungselements jeweils vom verriegelten in den entriegelten Zustand eingerichtet.

Die Bedieneinrichtung weist bevorzugt ein Betätigungselement, insbesondere einen Handgriff, auf, welcher zur Überführung der Verriegelungseinrichtung vom verriegelten in den entriegelten Zustand beweglich, insbesondere verschwenkbar, ist. Bevorzugt ist daher ein Handgriff vorgesehen, welcher von einem Bediener betätigt wird, um den Deckel im geschlossenen Zustand zu entriegeln und die Bewegung in den (teilweise) geöffneten Zustand freizugeben.

Zur sicheren Vorbereitung des Be- oder Entladevorgangs ist es günstig, wenn das Betätigungselement gegen die Federkraft eines Federelements beweglich, insbesondere verschwenkbar, ist. Bevorzugt ist das Betätigungselement, insbesondere einteilig, mit dem ersten Verriegelungselement verbunden, so dass eine Bewegung, insbesondere Verschwenkung, des Betätigungselements eine entsprechende Bewegung, insbesondere Verschwenkung, des ersten Verriegelungselements bewirkt.

Zur Erzielung einer teilesparenden, einfachen und zuverlässigen Ausführung ist es günstig, wenn das Betätigungselement zur Entriegelung des ersten Verriegelungselements entlang einer ersten Strecke beweglich, insbesondere um einen ersten Winkel verschwenkbar, und zur Entriegelung des zweiten Verriegelungselements entlang einer zweiten Strecke beweglich, insbesondere um einen zweiten Winkel verschwenkbar, ist. Somit ist das Betätigungselement, nach Wahl des Bedieners, um die erste oder die zweite Strecke beweglich. Die zweite Strecke ist von der ersten Strecke verschieden. Bevorzugt ist die zweite Strecke, bezogen auf die Ausgangsstellung des Betätigungselements, länger als die erste Strecke. Mit demselben Betätigungselement kann somit gesteuert werden, ob der Deckel lediglich in den teilweise geöffneten Zustand gebracht werden soll, um die Seitenwand freizugeben, oder ob der Deckel in den geöffneten Zustand überführt werden soll, um eine Be- oder Entladung über die oberseitige Beladeöffnung zu ermöglichen.

Um das Überführen vom geschlossenen über den teilweise geöffneten in den geöffneten Zustand mit einer einzigen, kontinuierlichen Betätigung zu ermöglichen, ist das erste Verriegelungselement, insbesondere der erste Verriegelungshebel, bei einer bevorzugten Ausführungsform dazu eingerichtet, das zweite Verriegelungselement, insbesondere den zweiten Verriegelungshebel, durch Bewegen des Betätigungselements entlang der zweiten Strecke in den entriegelten Zustand zu drücken.

Bei einer bevorzugten Ausführungsform wird der Deckel vom geschlossenen Zustand in den geöffneten Zustand um mehr als 50°, insbesondere mehr als 90°, bevorzugt im Wesentlichen 180°, verschwenkt.

Um den Bediener zu unterstützen, weist die Scharniereinrichtung bevorzugt eine Federeinrichtung auf, welche den Deckel vom geschlossenen Zustand in Richtung des geöffneten Zustands vorspannt. Besonders vorteilhaft ist diese Ausführung, wenn die Verriegelungseinrichtung mit dem ersten und/oder dem zweiten Verriegelungselement vorgesehen ist. Durch Entriegeln des ersten Verriegelungselements wird der Deckel unter der Wirkung der Federeinrichtung selbsttätig, d.h. ohne Unterstützung durch den Bediener, vom geschlossenen in Richtung des geöffneten Zustands bewegt.

Bei einer bevorzugten Ausführungsform ist der Deckel durch Bewegen des Betätigungselements, insbesondere des Handgriffs, entlang der ersten Strecke unter der Wirkung der Federeinrichtung der Scharniereinrichtung im teilweise geöffneten Zustand anordenbar und mittels des zweiten Verriegelungselements im teilweise geöffneten Zustand blockierbar. Bei dieser Ausführung drückt die Federeinrichtung den Deckel im entriegelten Zustand des ersten Verriegelungselements bevorzugt selbstständig, d.h. ohne Unterstützung durch den Benutzer, in den teilweise geöffneten Zustand, in welchem das zweite Verriegelungselement die weitere Bewegung des Deckels in Richtung des geöffneten Zustands verhindert. Durch Überführung des zweiten Verriegelungselements in den entriegelten Zustand wird die Bewegung, insbesondere Schwenkbewegung, des Deckels vom teilweise geöffneten Zustand in Richtung des geöffneten Zustands freigegeben. Bei einer bevorzugten Ausführungsform wird die Bewegung des Deckels vom teilweise geöffneten Zustand in Richtung des geöffneten Zustands durch die Federeinrichtung unterstützt, bevorzugt bis in einen Zwischenzustand zwischen dem teilweise geöffneten Zustand und dem geöffneten Zustand. Bevorzugt kann der Deckel vom Zwischenzustand ohne Unterstützung durch die Federeinrichtung, insbesondere durch manuelles Anheben, in den geöffneten Zustand gebracht werden.

Um den seitlichen Zugang in den Aufnahmeraum im Inneren des Aufbaus weiter zu verbessern, ist bei einer bevorzugten Ausführungsform eine weitere Seitenwand an derselben Längsseite des Aufbaus wie die Seitenwand vorgesehen, wobei die weitere Seitenwand zwischen einer eine weitere seitliche Zugangsöffnung verschließenden Schließstellung und einer die weitere seitliche Zugangsöffnung freigebenden Offenstellung beweglich ist, wobei ein weiterer Deckel vorgesehen ist, welcher zwischen einem eine weitere oberseitige Beladeöffnung verschließenden geschlossenen Zustand und einem die weitere oberseitige Beladeöffnung freigebenden geöffneten Zustand beweglich ist, wobei eine weitere Blockiereinrichtung vorgesehen ist, welche dazu ausgebildet ist, im geschlossenen Zustand des weiteren Deckels die weitere Seitenwand in der Schließstellung zu blockieren und in einem zumindest teilweise geöffneten Zustand des weiteren Deckels die Bewegung der weiteren Seitenwand in die Offenstellung freizugeben.

Bei einer weiteren bevorzugten Ausführungsform ist zumindest eine zusätzliche Seitenwand, vorzugsweise zwei zusätzliche Seitenwände, an der gegenüberliegenden Längsseite des Aufbaus vorgesehen. Die zumindest eine zusätzliche Seitenwand ist bevorzugt ident wie die Seitenwand an der anderen Längsseite ausgebildet. Bei dieser Ausführung kann der Aufnahmeraum über seitliche Zugangsöffnungen von beiden Seiten des Zustellwagens her beladen und entladen werden.

Die Erfindung wird nachstehend anhand eines in den Zeichnungen dargestellten Ausführungsbeispiels weiter erläutert.
Fig. 1 zeigt einen erfindungsgemäßen Zustellwagen im geschlossenen Zustand eines Deckels, über den der Zustellwagen von oben her beladen und entladen werden kann.

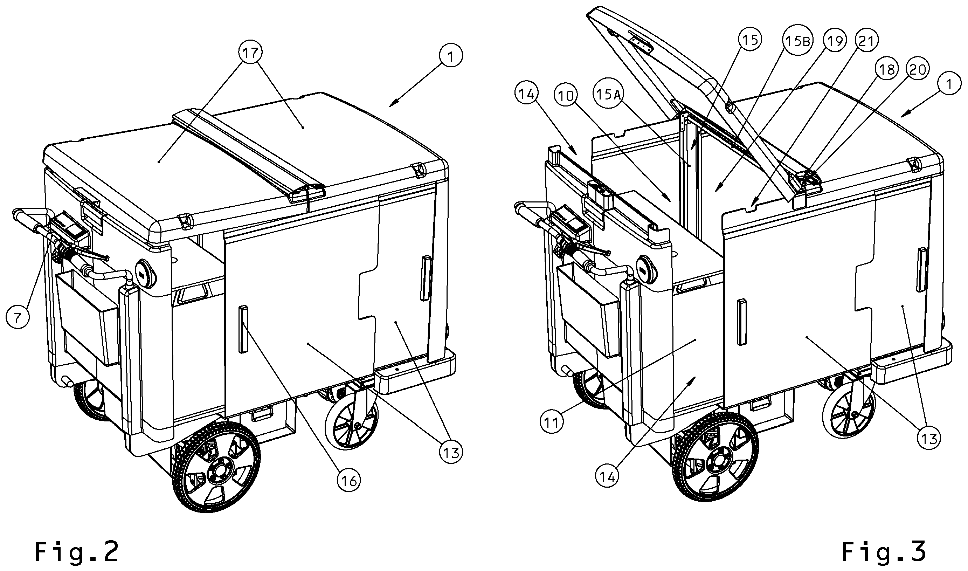

Fig. 2 zeigt den Zustellwagen der Fig. 1 im teilweise geöffneten Zustand und Fig. 3 in einem Zwischenzustand vor dem geöffneten Zustand.
Fig. 4 zeigt den Zustellwagen in Seitenansicht im geschlossenen Zustand des Deckels.
Fig. 5 zeigt das in Fig. 4 markierte Detail DA.
Fig. 6 zeigt den Zustellwagen in Seitenansicht im teilweise geöffneten Zustand des Deckels.
Fig. 7 zeigt das in Fig. 4 markierte Detail DB.
Fig. 8 zeigt den Zustellwagen in Seitenansicht im Zwischenzustand des Deckels.
Fig. 9 zeigt das in Fig. 4 markierte Detail DC.
Fig. 10 zeigt den Zustellwagen in Seitenansicht im geöffneten Zustand des Deckels.
Fig. 11 zeigt den Zustellwagen in Seitenansicht im geöffneten Zustand eines weiteren Deckels, welcher auf den geschlossenen Deckel umgeklappt ist.

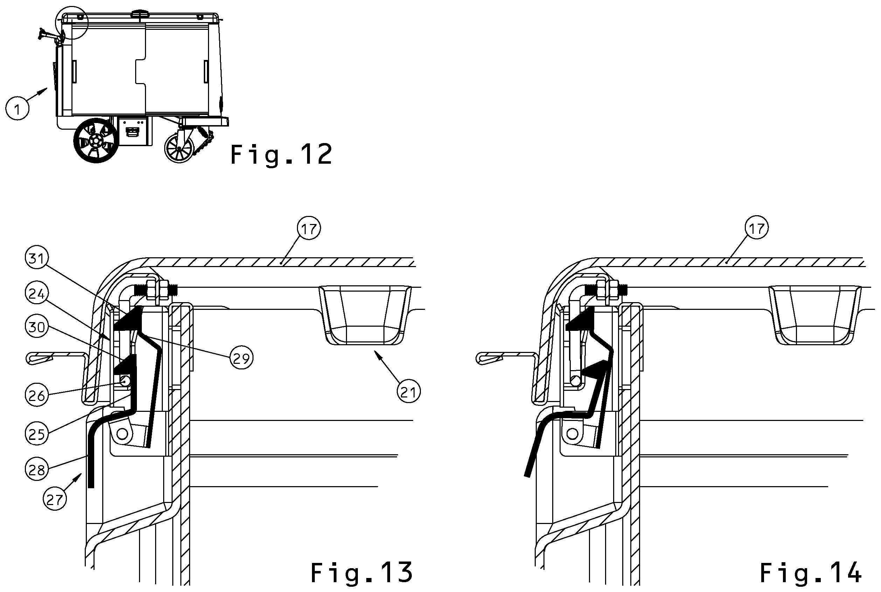

Fig. 12 zeigt den Zustellwagen im geschlossenen Zustand des Deckels.
Fig. 13 zeigt einen Schnitt entsprechend des in Fig. 12 markierten Details im Bereich einer Verriegelungseinrichtung zur Entriegelung des Deckels.
Fig. 14 zeigt eine Fig. 13 entsprechende Detailansicht, wobei ein erstes Verriegelungselement durch Betätigen eines Handgriffs in den entriegelten Zustand überführt wurde.

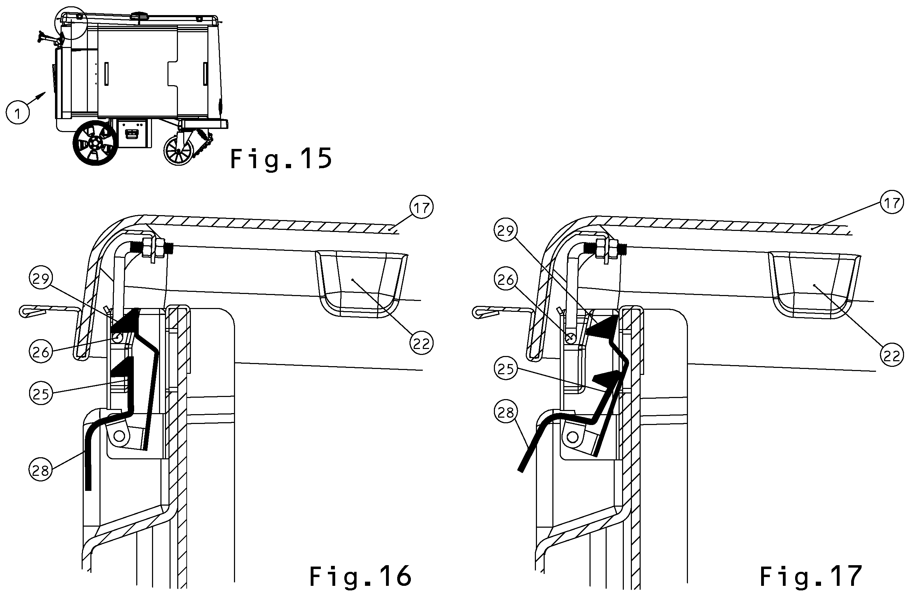

Fig. 15 zeigt den Zustellwagen im teilweise geöffneten Zustand des Deckels.
Fig. 16 zeigt einen Schnitt entsprechend des in Fig. 15 markierten Details der Verriegelungseinrichtung.
Fig. 17 zeigt eine Fig. 16 entsprechende Detailansicht, wobei ein zweites Verriegelungselement durch fortgesetztes Betätigen des Handgriffs über das erste Verriegelungselement in den entriegelten Zustand überführt wurde.

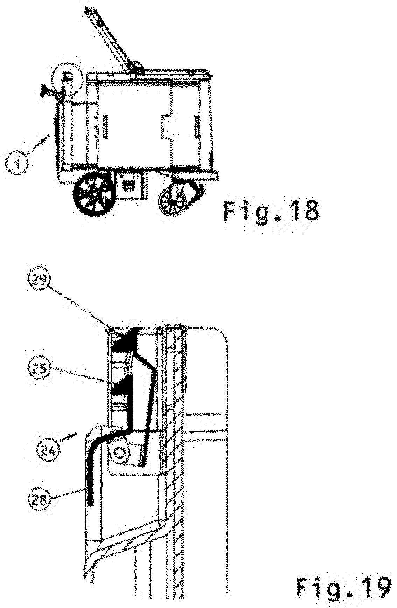

Fig. 18 zeigt den Zustellwagen im Zwischenzustand des Deckels, bis zu dem der Deckel unter der Wirkung einer Federeinrichtung angehoben wird.
Fig. 19 zeigt einen Schnitt entsprechend des in Fig. 18 markierten Details der Verriegelungseinrichtung im entriegelten Zustand.

Die Zeichnungen zeigen einen Zustellwagen 1, welcher als Post-Zustellwagen zum Transport von Poststücken, wie Briefen und Paketen, ausgebildet ist. Der Zustellwagen 1 weist ein Fahrgestell 2 auf, an welchem zwei Hinterräder 3 und zwei Vorderräder 4, hier zwei Lenkrollen, angeordnet sind. Die Hinterräder 3 sind mit einem Hinterradantrieb 5, insbesondere einem Elektro-Hinterradmotor, verbunden, um den Zustellwagen 1 fortzubewegen. An der Rückseite weist der Zustellwagen 1 ein Handhabungselement 6, hier einen Handhabungsbügel, auf, mit welchem der Zustellwagen 1 gelenkt und bevorzugt zudem der Hinterradantrieb 5 durch Anschieben unterstützt werden kann. Am Handhabungselement 6 ist ein Bedienelement 7, hier ein Bedienpaneel, vorgesehen, mit welchem der Benutzer des Zustellwagens 1 verschiedene Funktionen, beispielsweise die Geschwindigkeit des Hinterradantriebs 5, einstellen kann. Das Fahrgestell 2 trägt einen Aufbau 8 zur Aufnahme des Transportguts. Darüber hinaus weist der Zustellwagen 1 vorne eine Einrichtung 9 zur Überwindung eines Fahrbahnabsatzes auf, welcher insbesondere eine von der Fahrbahn hochstehende Bordsteinkante ist. Die Einrichtung 9 weist im Wesentlichen mittig zwischen den zwei Vorderrädern 4 einen Raupenantrieb 12 zur Überwindung des Fahrbahnabsatzes auf.

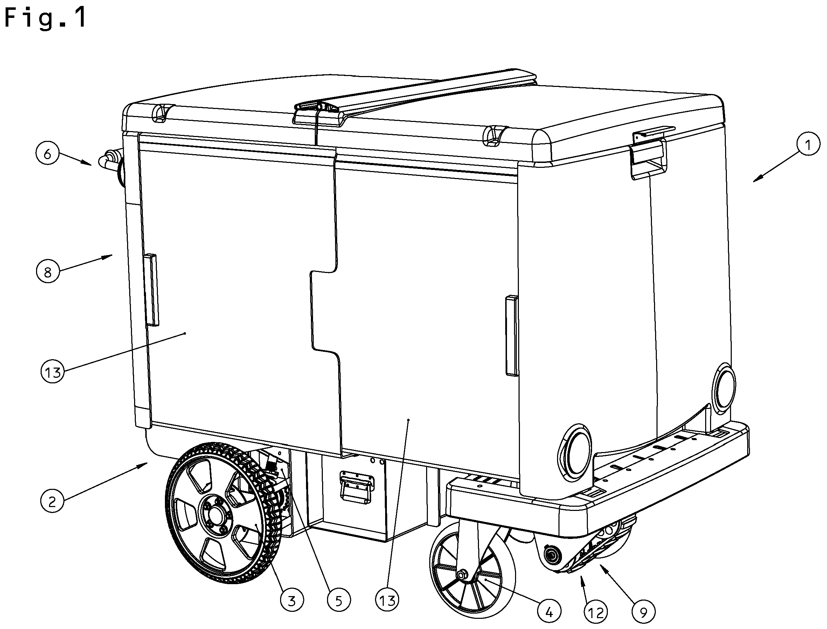

Der (im geschlossenen Zustand im Wesentlichen quaderförmige) Aufbau 8 weist an jeder Längsseite zwei Seitenwände 13 auf, welche jeweils zwischen einer eine seitliche Zugangsöffnung 14 vollständig verschließenden Schließstellung (vgl. Fig. 1) und einer die seitliche Zugangsöffnung 14 freimachenden Offenstellung verschieblich ist. Die zwei Seitenwände 13 sind als Schiebetüren ausgeführt, welche in Querrichtung des Fahrgestells 2 gegeneinander versetzt sind, so dass die Seitenwände 13 aneinander vorbeigleiten können. Der Aufbau 8 weist einen Rahmen 15 mit vertikalen Rahmenteilen 15A und horizontalen Rahmenteilen 15B auf, an welchem die oberen bzw. die unteren Randbereiche der Seitenwände 13 in Längsrichtung des Fahrgestells 2 verschieblich geführt sind und der mit einem Chassisboden 11 verbunden ist. In der Offenstellung erstreckt sich die seitliche Zugangsöffnung 14 entlang einer vertikalen Ebene an einer der Längsseiten des Aufbaus 8. An den Außenseiten der Seitenwände 13 sind Griffe 16 zum Verschieben der Seitenwände 13 vorgesehen.

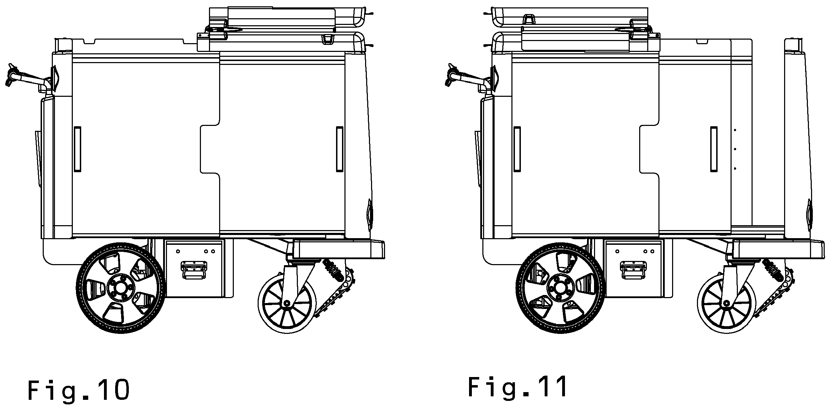

Darüber hinaus weist der Aufbau zwei Deckel 17 auf, welche an dem Rahmen 15 über eine Scharniereinrichtung 18 verschwenkbar angebracht sind. Die Deckel 17 sind jeweils um im Wesentlichen 180° von einem eine oberseitige Beladeöffnung 19 verschließenden geschlossenen Zustand (vgl. Fig. 1) in einen die oberseitige Beladeöffnung 19 freigebenden geöffneten Zustand (vgl. Fig. 10) beweglich. Im geöffneten Zustand erstreckt sich die Beladeöffnung 19 in horizontaler Ebene an der Oberseite des Aufbaus 8. Die Scharniereinrichtung 18 weist eine Federeinrichtung 20 auf, welche die Deckel 17 im geschlossenen Zustand in Richtung des geöffneten Zustands drückt, um das Anheben des jeweiligen Deckels 17 zu erleichtern. Beim Schließen des Deckels 17 wird die Federeinrichtung 20 gespannt. Beispielsweise kann die Federeinrichtung 20 eine oder mehrere Torsionsfedern aufweisen, welche zwischen dem Rahmen 15 und mit den Deckel 17 verbundenen Scharnierteilen wirkt.

Die seitliche Zugangsöffnung 14 und die oberseitige Beladeöffnung 19 führen in einen Aufnahmeraum 10 des Aufbaus 8, welcher mit verschiedenen Transportstücken beladen werden kann.

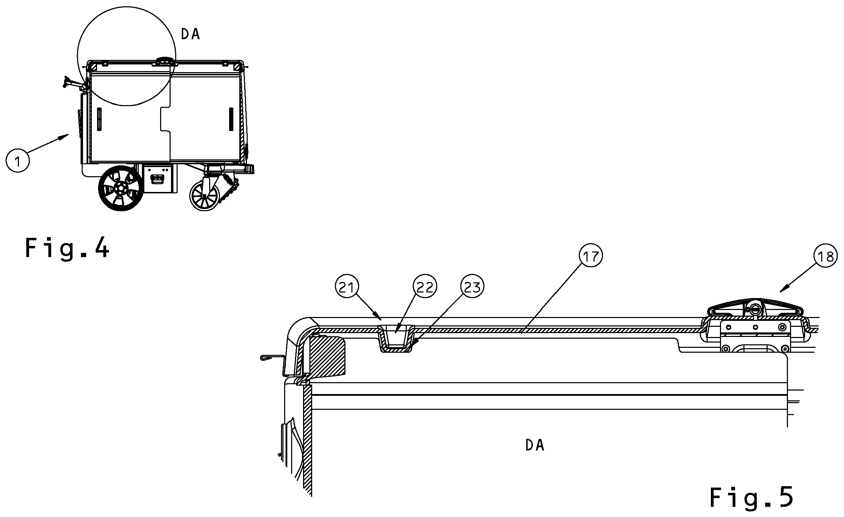

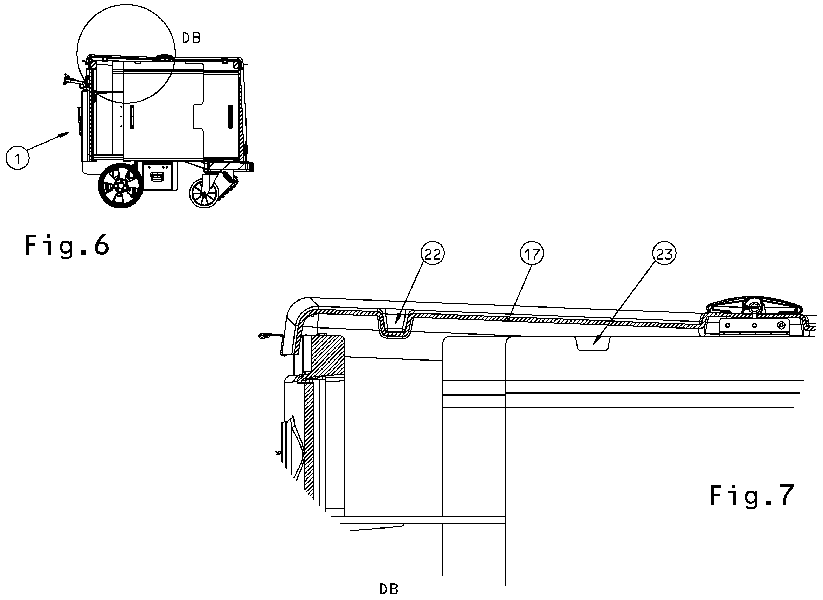

Darüber hinaus ist eine Blockiereinrichtung 21 vorgesehen, mit welcher die Seitenwand 13 in der Schließstellung blockiert, d.h. gegen ein Verschieben in die Offenstellung gesichert, ist, wenn der Deckel 17 im geschlossenen Zustand auf diese Seitenwand 13 abgesenkt ist. Durch Überführen des Deckels 17 in den teilweise geöffneten Zustand wird die Blockiereinrichtung 21 freigegeben, so dass die Seitenwand 13 anschließend von der Schließ- in die Offenstellung verschoben werden kann (vgl. Fig. 6 und Fig. 7). Die Blockiereinrichtung 21 weist einen Vorsprung 22 und eine Ausnehmung 23 auf, welche so geformt sind, dass der Vorsprung 22 im geschlossenen Zustand des Deckels 17 bei gleichzeitiger Anordnung der Seitenwand 13 in der Schließstellung in die Ausnehmung 23 eingreifen kann (vgl. Fig. 5). In der gezeigten Ausführung springt der Vorsprung 22 vom Deckel 17 nach innen vor. Von außen gesehen ist der Vorsprung 22 durch eine Einbuchtung des Deckels 17 gebildet. Bevorzugt ist der Vorsprung 22 einteilig mit den angrenzenden Abschnitten des Deckels 17 gebildet, beispielsweise durch ein Umformverfahren. Die Ausnehmung 23 ist am oberen Randbereich der Seitenwand 13 vorgesehen. Bevorzugt ist die Ausnehmung 23 durch eine Aussparung, beispielsweise einen Ausschnitt, des oberen Randbereichs der Seitenwand 13 gebildet. Zum Blockieren der Bewegung der Seitenwand 13 von der Schließ- in die Offenstellung kann der Vorsprung 22 von oben in die Ausnehmung 23 eingreifen, wodurch die Verschiebung in Längsrichtung des Aufbaus 8 gesperrt ist.

Darüber hinaus ist eine Verriegelungseinrichtung 24 vorgesehen, welche in einem verriegelten Zustand den Deckel 17 in dem geschlossenen Zustand, gegen die Kraft der Federeinrichtung 20 verriegelt und in einem entriegelten Zustand die Bewegung des Deckels 17 vom geschlossenen Zustand mit Unterstützung der Federeinrichtung 20 in Richtung des geöffneten Zustands freigibt.

Die Verriegelungseinrichtung 24 weist ein erstes Verriegelungselement 25 auf, welches in der gezeigten Ausführung als Verriegelungshebel ausgeführt ist, der verschwenkbar am Rahmen 15 des Aufbaus 8 gelagert ist. Das erste Verriegelungselement 25 wirkt mit einem, im gezeigten Beispiel als Rundteil ausgeführten, Rastelement 26 zusammen, welches an dem Deckel 17 vorgesehen ist. Im verriegelten Zustand ist das erste Verriegelungselement 25 am Rahmen 15 mit dem Rastelement 26 am Deckel 17 verhakt, so dass der Deckel 17 gegen die Federkraft der Federeinrichtung 20 im geschlossenen Zustand gehalten ist. Zum Entriegeln des ersten Verriegelungselements 25 ist eine Bedieneinrichtung 27 vorgesehen, welche einen, hier einteilig, mit dem ersten Verriegelungselement 25 verbundenen Handgriff 28 aufweist, welcher gegen die Kraft eines (nicht gezeigten) Federelements aus der Nullstellung verschwenkt werden kann. Durch Verschwenken des an der Rückseite des Aufbaus 8 für den Bediener zugänglichen Handgriffs 28 wird das erste Verriegelungselement 25 in den entriegelten Zustand verschwenkt. Durch die Wirkung der Federeinrichtung 20 wird der Deckel 17 in Richtung des geöffneten Zustands bis zu einem teilweise geöffneten Zustand hochgeschwenkt, in welchem das Rastelement 26 an einem zweiten Verriegelungselement 29 der Verriegelungseinrichtung 25 anschlägt, wodurch der Deckel 17 im teilweise geöffneten Zustand gehalten wird. Als zweites Verriegelungselement 29 ist in der gezeigten Ausführung ein zweiter Verriegelungshebel vorgesehen, welcher verschwenkbar am Rahmen 15 des Aufbaus 8 gelagert ist. Durch Entriegeln des zweiten Verriegelungselements 29 wird der Deckel 17 im teilweise geöffneten Zustand freigegeben, so dass der Deckel 17 unter der Federwirkung der Federeinrichtung 20 vom teilweise geöffneten Zustand in einen Zwischenzustand hochgeschwenkt wird, an dem die Federwirkung der Federeinrichtung 20 erschöpft ist. Ausgehend von diesem Zwischenzustand kann der Deckel 17 manuell in den geöffneten Zustand, liegend auf dem anderen Deckel 17 umgeklappt werden (vgl. Fig. 10).

Zur Entriegelung des ersten Verriegelungselements 25 wird der Handgriff 28 um einen ersten Winkel verschwenkt. Dadurch wird das erste Verriegelungselement entriegelt, so dass der Deckel 17, mit Hilfe der Federeinrichtung 20, im teilweise geöffneten Zustand angeordnet und mit dem zweiten Verriegelungselement im teilweise geöffneten Zustand gehalten wird. Zugleich wird die Blockiereinrichtung 21 in der Freigabestellung angeordnet, um die Verschiebung der Seitenwand 13 zu ermöglichen. Will der Benutzer daher die seitliche Zugangsöffnung 14, aber nicht die oberseitige Beladeöffnung 19 nutzen, wird der Benutzer den Handgriff 28 um den ersten Winkel verschwenken und dann die Seitenwand 13 verschieben. Soll die oberseitige Beladeöffnung 19 genutzt werden, wird der Benutzer den Handgriff 28 um einen zweiten Winkel verschwenken, welcher größer als der erste Winkel ist. Dadurch wird das erste Verriegelungselement 25 so weit verschwenkt, dass nicht nur das erste Verriegelungselement 25 vom Rastelement 26 entriegelt und der Deckel 17 im teilweise geöffneten Zustand angeordnet wird, sondern zudem das erste Verriegelungselement 25 das zweite Verriegelungselement 29 in den entriegelten Zustand drückt.

Das erste Verriegelungselement 25 weist eine erste Auflaufschräge 30 und das zweite Verriegelungselement 29 weist eine zweite Auflaufschräge 31 auf. Beim Überführen des Deckels 17 vom geöffneten in den geschlossenen Zustand trifft zunächst das Rastelement 26 am Deckel 17 auf die zweite Auflaufschräge 31 des zweiten Verriegelungselements 29, wodurch das zweite Verriegelungselement 29 gegen die Federkraft des Federelements ausgelenkt wird, so dass das Rastelement 26 das zweite Verriegelungselement 29 passieren kann. Durch die Federkraft des Federelements kehrt das zweite Verriegelungselement 29 danach in seine Ausgangsstellung zurück. Anschließend trifft das Rastelement 26 auf die erste Auflaufschräge 30 des ersten Verriegelungselements 25, wodurch das erste Verriegelungselement 25 gegen die Federkraft des Federelements ausgelenkt wird, das Rastelement 26 das erste Verriegelungselement 25 passieren kann und das erste Verriegelungselement 25 danach in seine Ausgangsstellung zurückkehren kann.

Die weitere Seitenwand und der weitere Deckel (ebenso wie die zusätzlichen Seitenwände auf der gegenüberliegenden Längsseite) können entsprechend der oben geschilderten Funktionsweise geöffnet bzw. geschlossen werden. Zu diesem Zweck sind entsprechende weitere Einrichtungen, insbesondere weitere Blockier- und Verriegelungseinrichtungen, vorgesehen.

### Bezugsziffernliste:

1 Zustellwagen
2 Fahrgestell
3 Hinterräder
4 Vorderräder
5 Hinterradantrieb
6 Handhabungselement
7 Bedienelement
8 Aufbau
9 Einrichtung
10 Aufnahmeraum
11 Boden
12 Raupenantrieb
13 Seitenwand
14 seitliche Zugangsöffnung
15 Rahmen
16 Griff
17 Deckel
18 Scharniereinrichtung
19 oberseitige Beladeöffnung
20 Federeinrichtung
21 Blockiereinrichtung
22 Vorsprung
23 Ausnehmung
24 Verriegelungseinrichtung
25 erstes Verriegelungselement
26 Rastelement
27 Bedieneinrichtung
28 Handgriff
29 zweites Verriegelungselement
30 erste Auflaufschräge
31 zweite Auflaufschräge

## Patentansprüche

1. Zustellwagen (1), insbesondere Post-Zustellwagen, aufweisend:
ein Fahrgestell (2) mit Rädern,
einen vom Fahrgestell (2) getragenen Aufbau (8) mit einem Aufnahmeraum (10) zur Aufnahme von Transportgut, insbesondere von Poststücken,
wobei der Aufbau (8) zumindest eine Seitenwand (13) aufweist, welche als Schiebetür ausgeführt ist und zwischen einer eine seitliche Zugangsöffnung (14) verschließenden Schließstellung und einer die seitliche Zugangsöffnung (14) freigebenden Offenstellung beweglich ist,
wobei der Aufbau (8) weiters zumindest einen Deckel (17) aufweist, welcher zwischen einem eine oberseitige Beladeöffnung (19) verschließenden geschlossenen Zustand und einem die oberseitige Beladeöffnung (19) freigebenden geöffneten Zustand beweglich ist,
wobei eine Scharniereinrichtung (18) vorgesehen ist, mit welcher der Deckel (17) zwischen dem geschlossenen Zustand über einen teilweise geöffneten Zustand in den geöffneten Zustand verschwenkbar ist,
**gekennzeichnet durch**
eine Blockiereinrichtung (21), welche dazu ausgebildet ist, im geschlossenen Zustand des Deckels (17) die Seitenwand (13) in der Schließstellung zu blockieren und in einem zumindest teilweise geöffneten Zustand des Deckels (17) die Bewegung der Seitenwand (13) von der Schließ- in die Offenstellung freizugeben, wobei durch die Bewegung des Deckels (17) vom geschlossenen Zustand in den zumindest teilweise geöffneten Zustand die Blockiereinrichtung (21) in einer Freigabestellung angeordnet wird, in welcher die Bewegung der Seitenwand (13) von der Schließ- in Richtung der Offenstellung freigegeben wird.

2. Zustellwagen (1) nach Anspruch 1, **dadurch gekennzeichnet, dass** die Blockiereinrichtung (21) einen Vorsprung (22) an einem von Seitenwand (13) und Deckel (17) und eine Ausnehmung (23) am anderen von Seitenwand (13) und Deckel (17) aufweist, wobei der Vorsprung (22) zum Blockieren der Bewegung der Seitenwand (13) von der Schließ- in die Offenstellung im geschlossenen Zustand des Deckels (17) in die Ausnehmung (23) eingreift.

3. Zustellwagen (1) nach Anspruch 2, **dadurch gekennzeichnet, dass** die Ausnehmung (23) an einem oberen Randbereich der Seitenwand (13) und der Vorsprung (22) an einem seitlichen Randbereich des Deckels (17) vorgesehen ist.

4. Zustellwagen (1) nach einem der Ansprüche 1 bis 3, **gekennzeichnet durch**:
eine Verriegelungseinrichtung (24), welche in einem verriegelten Zustand den Deckel (17) in dem geschlossenen Zustand verriegelt und in einem entriegelten Zustand die Bewegung des Deckels (17) vom geschlossenen Zustand in Richtung des geöffneten Zustands freigibt.

5. Zustellwagen (1) nach Anspruch 4, **dadurch gekennzeichnet, dass** die Verriegelungseinrichtung (24) ein erstes Verriegelungselement (25), insbesondere einen ersten Verriegelungshebel, aufweist, wobei der Deckel (17) in einem entriegelten Zustand des ersten Verriegelungselements (25) in dem teilweise geöffneten Zustand anordenbar ist, in welchem der Deckel (17) gegen eine Bewegung in den geöffneten Zustand gesichert ist.

6. Zustellwagen (1) nach Anspruch 5, **dadurch gekennzeichnet, dass** die Verriegelungseinrichtung (24) ein zweites Verriegelungselement (29), insbesondere einen zweiten Verriegelungshebel, aufweist, wobei der Deckel (17) in einem entriegelten Zustand des zweiten Verriegelungselements (29) vom teilweise geöffneten Zustand in den geöffneten Zustand beweglich ist.

7. Zustellwagen (1) nach Anspruch 6, **dadurch gekennzeichnet, dass** das erste Verriegelungselement (25) und/oder das zweite Verriegelungselement (29) eine Auflaufschräge (30, 31) zur Auslenkung des ersten bzw. zweiten Verriegelungselements (29) beim Bewegen des Deckels (17) vom geöffneten in den geschlossenen Zustand aufweist.

8. Zustellwagen (1) nach einem der Ansprüche 1 bis 7, **gekennzeichnet durch**:
eine Bedieneinrichtung (27) zur Überführung der Verriegelungseinrichtung (24) vom verriegelten Zustand in den entriegelten Zustand.

9. Zustellwagen (1) nach Anspruch 8, **dadurch gekennzeichnet, dass** die Bedieneinrichtung (27) ein Betätigungselement, insbesondere einen Handgriff (28), aufweist, welcher zur Überführung der Verriegelungseinrichtung (24) vom verriegelten in den entriegelten Zustand beweglich, insbesondere verschwenkbar, ist.

10. Zustellwagen (1) nach Anspruch 9, **dadurch gekennzeichnet, dass** das Betätigungselement gegen die Federkraft eines Federelements beweglich, insbesondere verschwenkbar, ist.

11. Zustellwagen (1) nach Anspruch 9 oder 10, wenn abhängig von Anspruch 6, **dadurch gekennzeichnet, dass** das Betätigungselement zur Entriegelung des ersten Verriegelungselements (25) entlang einer ersten Strecke beweglich, insbesondere um einen ersten Winkel verschwenkbar, und zur Entriegelung des zweiten Verriegelungselements (29) entlang einer zweiten Strecke beweglich, insbesondere um einen zweiten Winkel verschwenkbar, ist.

12. Zustellwagen (1) nach Anspruch 11 mit Anspruch 6, **dadurch gekennzeichnet, dass** das erste Verriegelungselement (25), insbesondere der erste Verriegelungshebel, dazu eingerichtet ist, das zweite Verriegelungselement (29), insbesondere den zweiten Verriegelungshebel, durch Bewegen des Betätigungselements entlang der zweiten Strecke in den entriegelten Zustand zu drücken.

13. Zustellwagen (1) nach einem der Ansprüche 1 bis 12, **dadurch gekennzeichnet, dass** die Scharniereinrichtung (18) eine Federeinrichtung (20) aufweist, welche den Deckel (17) in Richtung des geöffneten Zustands vorspannt.

14. Zustellwagen (1) nach Anspruch 13 mit den Ansprüchen 6 und 11, **dadurch gekennzeichnet, dass** der Deckel (17) durch Bewegen des Betätigungselements, insbesondere des Handgriffs (28), entlang der ersten Strecke unter der Wirkung der Federeinrichtung (20) der Scharniereinrichtung (18) im teilweise geöffneten Zustand anordenbar und mittels des zweiten Verriegelungselements (29) im teilweise geöffneten Zustand blockierbar ist.

## Claims

1. Delivery cart (1), in particular a mail-delivery cart, comprising:
a chassis (2) with wheels,
a body (8) carried by the chassis (2) with a receiving compartment (10) for receiving cargo, in particular mail items,
wherein the body (8) comprises at least one side wall (13) that is designed as a sliding door and is movable between a closed position closing a lateral access opening (14) and an open position releasing the lateral access opening (14),
wherein the body (8) further comprises at least one lid (17) that is movable between a closed condition closing an upper loading opening (19) and an open condition releasing the upper loading opening (19),
wherein a hinge device (18) is provided by means of which the lid (17) can be pivoted from the closed condition, via a partially open condition, into the open condition,
**characterised in that**
a blocking device (21) that is configured to block the side wall (13) in the closed position in the closed condition of the lid (17) and, in an at least partially open condition of the lid (17), to release movement of the side wall (13) from the closed into the open position, wherein movement of the lid (17) from the closed condition into the at least partially open condition places the blocking device (21) in a release position in which movement of the side wall (13) from the closed toward the open position is released.

2. Delivery cart (1) according to claim 1, **characterised in that** the blocking device (21) comprises a projection (22) on one of the side wall (13) and the lid (17) and a recess (23) on the other of the side wall (13) and the lid (17), the projection (22) engaging in the recess (23) to block movement of the side wall (13) from the closed into the open position in the closed condition of the lid (17).

3. Delivery cart (1) according to claim 2, **characterised in that** the recess (23) is provided on an upper edge region of the side wall (13) and the projection (22) is provided on a lateral edge region of the lid (17).

4. Delivery cart (1) according to any one of claims 1 to 3, **characterised by**:
a locking device (24) which, in a locked condition, locks the lid (17) in the closed condition and, in an unlocked condition, releases movement of the lid (17) from the closed toward the open condition.

5. Delivery cart (1) according to claim 4, **characterised in that** the locking device (24) comprises a first locking element (25), in particular a first locking lever, the lid (17) being arrange-able, in an unlocked condition of the first locking element (25), in a partially open condition in which the lid (17) is secured against movement into the open condition.

6. Delivery cart (1) according to claim 5, **characterised in that** the locking device (24) comprises a second locking element (29), in particular a second locking lever, the lid (17) being movable from the partially open condition into the open condition in an unlocked condition of the second locking element (29).

7. Delivery cart (1) according to claim 6, **characterised in that** the first locking element (25) and/or the second locking element (29) comprises a ramp (30, 31) for deflecting the first or second locking element (29) when the lid (17) is moved from the open into the closed condition.

8. Delivery cart (1) according to any one of claims 1 to 7, **characterised by**
an actuating device (27) for transferring the locking device (24) from the locked condition into the unlocked condition.

9. Delivery cart (1) according to claim 8, **characterised in that** the actuating device (27) comprises an actuation element, in particular a handle (28), which is movable, in particular pivotable, for transferring the locking device (24) from the locked into the unlocked condition.

10. Delivery cart (1) according to claim 9, **characterised in that** the actuation element is movable, in particular pivotable, against the spring force of a spring element.

11. Delivery cart (1) according to claim 9 or 10, when dependent on claim 6, **characterised in that** the actuation element is movable, in particular pivotable, along a first distance for unlocking the first locking element (25) and movable, in particular pivotable, along a second distance for unlocking the second locking element (29).

12. Delivery cart (1) according to claim 11 with claim 6, **characterised in that** the first locking element (25), in particular the first locking lever, is configured to press the second locking element (29), in particular the second locking lever, into the unlocked condition by movement of the actuation element along the second distance.

13. Delivery cart (1) according to any one of claims 1 to 12, **characterised in that** the hinge device (18) comprises a spring device (20) that biases the lid (17) toward the open condition.

14. Delivery cart (1) according to claim 13 with claims 6 and 11, **characterised in that** the lid (17) can be arranged, by movement of the actuation element, in particular the handle (28), along the first distance, under the effect of the spring device (20) of the hinge device (18), in the partially open condition and can be blocked in the partially open condition by means of the second locking element (29).

## Revendications

1. Véhicule de livraison (1), en particulier véhicule de livraison de courrier, comprenant :
un châssis (2) avec des roues,
une superstructure (8) supportée par le châssis (2) avec un espace de réception (10) pour recevoir des marchandises à transporter, en particulier des articles de courrier,
dans lequel la superstructure (8) comprend au moins une paroi latérale (13) réalisée en tant que porte coulissante et mobile entre une position fermée fermant une ouverture d'accès latérale (14) et une position ouverte libérant l'ouverture d'accès latérale (14),
dans lequel la superstructure (8) comprend en outre au moins un couvercle (17) mobile entre un état fermé fermant une ouverture de chargement supérieure (19) et un état ouvert libérant l'ouverture de chargement supérieure (19),
dans lequel une articulation (18) est prévue, avec laquelle le couvercle (17) peut pivoter entre l'état fermé via un état partiellement ouvert vers l'état ouvert,
**caractérisé en ce que**
un dispositif de blocage (21) configuré pour bloquer la paroi latérale (13) dans la position fermée dans l'état fermé du couvercle (17) et pour libérer le mouvement de la paroi latérale (13) de la position fermée vers la position ouverte dans un état au moins partiellement ouvert du couvercle (17), dans lequel le mouvement du couvercle (17) de l'état fermé vers l'état au moins partiellement ouvert positionne le dispositif de blocage (21) dans une position de libération dans laquelle le mouvement de la paroi latérale (13) de la position fermée vers la position ouverte est libéré.

2. Véhicule de livraison (1) selon la revendication 1, **caractérisé en ce que** le dispositif de blocage (21) comprend une saillie (22) sur l'un parmi la paroi latérale (13) et le couvercle (17) et une indentation (23) sur l'autre parmi la paroi latérale (13) et le couvercle (17), dans lequel la saillie (22) s'engage dans l'indentation (23) pour bloquer le mouvement de la paroi latérale (13) de la position fermée vers la position ouverte dans l'état fermé du couvercle (17).

3. Véhicule de livraison (1) selon la revendication 2, **caractérisé en ce que** l'indentation (23) est prévue sur une zone de bord supérieur de la paroi latérale (13) et la saillie (22) est prévue sur une zone de bord latéral du couvercle (17).

4. Véhicule de livraison (1) selon l'une des revendications 1 à 3, **caractérisé en ce que**
un dispositif de verrouillage (24) qui, dans un état verrouillé, verrouille le couvercle (17) dans l'état fermé et, dans un état déverrouillé, libère le mouvement du couvercle (17) de l'état fermé vers l'état ouvert.

5. Véhicule de livraison (1) selon la revendication 4, **caractérisé en ce que** le dispositif de verrouillage (24) comprend un premier élément de verrouillage (25), en particulier un premier levier de verrouillage, dans lequel le couvercle (17) peut être positionné dans l'état partiellement ouvert dans l'état déverrouillé du premier élément de verrouillage (25), dans lequel le couvercle (17) est sécurisé contre un mouvement vers l'état ouvert.

6. Véhicule de livraison (1) selon la revendication 5, **caractérisé en ce que** le dispositif de verrouillage (24) comprend un deuxième élément de verrouillage (29), en particulier un deuxième levier de verrouillage, dans lequel le couvercle (17) peut être déplacé de l'état partiellement ouvert vers l'état ouvert dans l'état déverrouillé du deuxième élément de verrouillage (29).

7. Véhicule de livraison (1) selon la revendication 6, **caractérisé en ce que** le premier élément de verrouillage (25) et/ou le deuxième élément de verrouillage (29) comprend une rampe (30, 31) pour dévier le premier ou le deuxième élément de verrouillage (29) lors du déplacement du couvercle (17) de l'état ouvert vers l'état fermé.

8. Véhicule de livraison (1) selon l'une des revendications 1 à 7, **caractérisé en ce que**
un dispositif de commande (27) pour transférer le dispositif de verrouillage (24) de l'état verrouillé à l'état déverrouillé.

9. Véhicule de livraison (1) selon la revendication 8, **caractérisé en ce que** le dispositif de commande (27) comprend un élément d'actionnement, en particulier une poignée (28), qui est mobile, en particulier pivotante, pour transférer le dispositif de verrouillage (24) de l'état verrouillé à l'état déverrouillé.

10. Véhicule de livraison (1) selon la revendication 9, **caractérisé en ce que** l'élément d'actionnement est mobile, en particulier pivotant, contre la force de ressort d'un élément de ressort.

11. Véhicule de livraison (1) selon la revendication 9 ou 10, si dépendant de la revendication 6, **caractérisé en ce que** l'élément d'actionnement est mobile le long d'une première course, en particulier pivotant d'un premier angle, pour déverrouiller le premier élément de verrouillage (25) et mobile le long d'une deuxième course, en particulier pivotant d'un deuxième angle, pour déverrouiller le deuxième élément de verrouillage (29).

12. Véhicule de livraison (1) selon la revendication 11 avec la revendication 6, **caractérisé en ce que** le premier élément de verrouillage (25), en particulier le premier levier de verrouillage, est configuré pour pousser le deuxième élément de verrouillage (29), en particulier le deuxième levier de verrouillage, dans l'état déverrouillé en déplaçant l'élément d'actionnement le long de la deuxième course.

13. Véhicule de livraison (1) selon l'une des revendications 1 à 12, **caractérisé en ce que** l'articulation (18) comprend un élément de ressort (20) qui sollicite le couvercle (17) en direction de l'état ouvert.

14. Véhicule de livraison (1) selon la revendication 13 avec les revendications 6 et 11, **caractérisé en ce que** le couvercle (17) peut être positionné dans l'état partiellement ouvert en déplaçant l'élément d'actionnement, en particulier la poignée (28), le long de la première course sous l'action de l'élément de ressort (20) de l'articulation (18) et peut être bloqué dans l'état partiellement ouvert à l'aide du deuxième élément de verrouillage (29).
